# EUROPEAN PATENT APPLICATION

(11) **EP 4 290 893 A1**
(43) Date of publication of application: **13.12.2023**
(21) Application number: 22178073.7
(22) Date of filing: 09.06.2022
(51) Int. Cl.: H04W 4/021, H04W 4/029, H04W 4/90

(54) **METHOD FOR DETECTING A PERSON/ITEM IN A DANGER-ZONE, AND A RESPECTIVE COMMUNICATION DEVICE AND SYSTEM**

(71) Applicant: Siemens Gamesa Renewable Energy A/S, 7330 Brande (DK)
(72) Inventor: Moeller, Jesper, 6700 Esbjerg (DK); Stege, Jason, 7100 Vejle (DK); Kalogirou, Andromachi, 8000 Aarhus C (DK)
(74) Representative: SGRE-Association

(57) **Abstract**

The invention concerns a method for detecting a person (10) and/or an item being in a danger-zone of a site (100), wherein the person (10) and/or the item comprises a communication device (12), wherein the method further comprises: detecting (300) the site (100), creating (320) a multidimensional-map with a location of objects (110), computing (340) the at least one danger-zone (112) for at least one object (110) based on the created multidimensional-map, determining (360a) the location of the communication device (12) of the person (10) and/or of the item, detecting (380) that the communication device (12) of the person (10) and/or the item is in the at least one danger-zone (112) of the at least one object (110) based on the at least one computed danger-zone (112) as well as on the determined location of the communication device (12) of the person (10) and/or the item.

## Description

The invention relates to a method for detecting a person/item in a danger-zone of a site, especially a work site, and a communication device therefore as well as a system therefore.

Currently, people are empowered to make their own decisions based on industry or company specific safety principles. Companies often have a priority in safety with zero harm being always the goal and relies a lot on people's responsibility and skills in order to achieve that. In overall, safety strategies and rules rely on the human critical mind, on training and manual reporting. In addition, companies are advised to comply with the general data protection regulation (GDPR).

Current safety systems rely on a technician's senses, training, and manual reporting to ensure workers are safe during lifting operations or other kinetic events in heavy industry. However, due to the concern of exposing themselves to a group of colleagues or the possibility of embarrassment, people might fall into mistakes which they never report, due to social concerns or in order to avoid a shutdown resulting in productivity reduction. In case of an incident, it might be the company's policy that all operations have to stop until the incident is investigated and the reason is analyzed. A lack of reporting or incidents being overlooked can be extremely dangerous and not fruitful at all for future safety strategies and risk mitigation.

In general, there is interest in that an object, e.g. heavy equipment like a generator of a wind turbine, a rotor blade, or a wind turbine nacelle, which is moved on a work site, does not collide with persons and/or other sensitive technical equipment. Furthermore, on work sites, the environment for workers can change constantly and rapidly, so workers can also be exposed to new danger-zones all the time.

It is an object of the present invention to at least partially eliminate the disadvantages described above. In particular, it is the object of the present invention to provide a simple method respectively a simple communication device respectively a simple system for avoiding dangerous situations for persons and/or items during work on a site, especially a work site, where in addition, the identity of persons can be kept anonymous.

The foregoing object is solved by a method for detecting a person and/or an item being in a danger-zone of a site having the features of claim 1 and a communication device having the features of claim 13 and a system having the features of claim 15. Further features and details of the invention result from the sub-claims, the description and the drawings. In this context, features and details described in connection with the method according to the invention naturally also apply in connection with the communication device and/or the system according to the invention, and vice versa in each case, so that reference is or can always be made mutually with respect to the disclosure concerning the individual aspects of the invention.

According to a first aspect, the present invention discloses a method for detecting a person and/or an item being in a danger-zone of a site, especially a work site, wherein the person comprises a communication device, e.g. a watch, and/or the item comprises a communication device. The method comprises as a step that the site is detected, e.g. by means of a camera. As a further step, the method comprises that a multidimensional-map with a location of objects on the site or objects and living beings on the site is created, e.g. by means of a server. As a further step, the method comprises that the at least one danger-zone for at least one object on the site based on the created multidimensional-map is computed, e.g. by means of a server. As a further step, the method comprises that the location of the communication device of the person and/or the location of the communication device of the item is determined, e.g. by means of a processor and a satellite signal receiver. As a further step, the method comprises that it is based on the at least one computed danger-zone as well as the determined location of the communication device of the person and/or of the item detected, e.g. by means of the communication device itself, that the communication device of the person and/or the communication device of the item is in the at least one danger-zone of the at least one object.

The method steps described before and in the following can be carried out, if technically reasonable, individually, together, singly, repeatedly, temporally in parallel and/or sequentially in any order.

In particular, the method is for detecting a person and/or an item being in a danger-zone of a work site, in which in particular a wind turbine or parts of a wind turbine are manufactured or parts of a wind turbine are assembled to a wind turbine, especially outdoors or indoors. Advantageously, the method according to the invention can be used to protect persons from hazards on a work site for assembling wind turbine parts to form a wind turbine in a particularly safe manner.

In particular, the site is a work site, especially a construction site.

The item can be understood as an object. The object is, for example, a wind turbine part like a wind turbine blade, a generator for generating electrical energy or a wind turbine nacelle. A wind turbine part can also be understood as a wind turbine component.

A living being can be a person (human being).

In particular, the detection of the site can be performed by a detection means, e.g. an optical detection means such as a camera. Especially the detection of the site can be performed by a single detection means or multiple locally distributed detection means.

In particular, data for the creation of the multidimensional map is generated when the site is detected, e.g. by the means of a camera, wherein in particular the multidimensional map is created with at least a part of the generated data. The generated data (when the site is detected) can also be called site-data.

In particular, a 2D-map with the location of objects on the site or objects and living beings on the site is created. A 2D-map (2-dimensional) can be created particularly easily and fast. It is also conceivable that a 3D-map (3-dimensional) with the location of objects on the site or objects and living beings on the site is created. For example, a drone with a 3D-camera arranged on the drone can be used to detect respectively capture the site, especially when the work site is outdoors. The two respectively three dimensions can particularly be length and/or height and/or depth.

The creation of the multidimensional-map is in particular done by means of a server, especially by means of a processor of the server. The term *"server"* can also be understood as a data processing system. The server can comprise a data memory, a processor, etc. In particular, the server and the communication device of the person respectively of the item are separated from each other in terms of location. Furthermore, the server can be designed to communicate with a communication device and/or a detection means and/or an object, e.g. a machine such as a crane, and/or a reference system, e.g. a differential global positioning system (DGPS).

In particular, for each of multiple objects on the site, a danger-zone is created. Features, details and/or benefits explained for the at least one danger zone also apply to the other danger zones, and vice versa. The at least one danger-zone can be understood as region around an object on the site. The at least one danger-zone can be a multidimensional danger-zone, in particular a 2D-danger-zone or a 3D-danger-zone. The two respectively three dimensions can particularly be length and/or height and/or depth. A danger-zone can be defined by a set of 2D respectively 3D coordinates that define the boundary of the danger-zone.

Furthermore, the at least one danger-zone can be computed in dependency of the object for which the danger-zone is created. In particular, the at least one danger-zone can be computed in dependency of features of the object, for example, in dependency of the length and/or the (object-)height and/or the depth and/or the weight and/or the temperature and/or the height of object with respect to the ground and/or the speed with which the object is moved.

The computation of the at least one danger-zone of an object is in particular done by means of a server, especially by means of a processor of the server. The term *"server"* can also be understood as a data processing system. The server can comprise a data memory, a processor, etc. In particular, for computing the danger-zone and for creating the multidimensional-map, the same server is used. Thus, a system according to the invention for detecting a person and/or an item being in a danger-zone of a site can be built particularly simple.

The location of the communication device of the person respectively the item can be understood as a location point. For example, if a worker wears a watch as a communication device, the spatial dimensions of the watch itself can form a location point. Thus, advantageously, a signal is given to the worker only when the watch as the communication device of the person itself is in a danger-zone of an object. As a result, workers are not unnecessarily disturbed frequently. It is also conceivable that the location of the communication device of the person respectively the item can be a location region around the communication device. The location region around the communication device can be a multidimensional location region, in particular a 2D-location region or a 3D-location region, around the communication device. The two respectively three dimensions can particularly be length and/or height and/or depth. For example, if a worker wears a watch as a communication device, a region around the spatial dimensions of the watch itself can form the location region. In particular, it may already be sufficient if a part of the location region of the communication device overlaps with the at least one danger-zone of the object so that the communication device is considered to be detected in the danger-zone. This means that workers are warned more frequently by a signal, but workers can be particularly well protected from danger.

The detection that the communication device of the person and/or of the item is in the at least one danger-zone of the at least one object based on the at least one computed danger-zone as well as the determined location of the communication device of the person and/or of the item can be a detection based on receiving radio signals from multiple places, for example by receiving radio signals from navigation satellites, especially GPS, or the like. A spatial reference point can be set for this purpose. It is also conceivable that the detection of the communication device in the danger-zone is in particular an optical detection, e.g. by means of a camera.

Especially, the present invention can provide an enhanced sense of safety for persons, e.g. workers, without interrupting operations, increase productivity and reduce the risk of accidents. The system according to the invention can use an anonymous notification, especially a tactical notification. The significant portion of the fully anonymized operational monitoring can ensure full GDPR compliance. Furthermore, due to full anonymity of the system, the data of the detected site can also be shared directly with equipment

(e.g. cranes, forklift and other lifting equipment in a construction area). In particular, full anonymity allows the potential safety violations to be automatically logged without stopping the operation. The advantage of knowing the latitude and longitude of an incident in an industry, especially in heavy industry, often directs increased attention to the sub-industry causing the issue with the potential of preventing future cases.

It may be advantageous if, in a method according to the invention, the location of the communication device of the person is determined by the communication device of the person itself and/or the location of the communication device of the item is determined by the communication device of the item itself. In other words, the communication device can be self-aware of its position, e.g. by its 3D coordinates. Thus, the detection of a person and/or an item being in a danger-zone of a site can be particularly simple and/or fast. In particular, the communication device can receive radio signals from multiple places; for example, the communication device receives radio signals from navigation satellites, to determine the location of itself.

It may be advantageous if, in a method according to the invention, being in the at least one danger-zone of the at least one object is detected by the communication device of the person itself and/or being in the at least one danger-zone of the at least one object is detected by the communication device of the item itself. Thus, the detection of a person and/or an item being in a danger-zone of a site can be particularly fast and anonymous. For example, the at least one danger-zone of the at least one object can be computed by means of a server and further, the at least one danger-zone of the at least one object is broadcasted to the communication device of the person respectively the item. Thus, the danger-zones of the objects on the site are known by the communication device itself.

It may be advantageous if, in a method according to the invention, the communication device of the person notifies a server when it is in the at least one danger-zone of the at least one object and/or the communication device of the item notifies a server when it is in the at least one danger-zone of the at least one object. Thus, for example, it can be ensured that the intervention in a danger-zone of an object has taken place and this can be reported, especially anonymously reported. Further, with the notification of the server, the server can be caused to send a signal to a machine, such as a crane, to stop a movement process of the crane that is currently moving the object. The notification can comprise information about the time of intervention in a danger-zone and the location, e.g. in the form of coordinates. Especially the notification is free of information about the identity of a person and/or item. Thus, persons, especially workers, are independent of any social concerns while wearing a communication device such as a watch.

It may be advantageous if, in a method according to the invention, the server is configured such that an identification of the communication device of the person in the notification of the communication device of the person remains unconsidered by the server. In this case, for example, the communication device can transmit the identity of the communication device or the person in the event of an intrusion into a danger-zone of an object, but the identity of the communication device respectively the person still remains anonymous. Thus, for example, it can be ensured that the intervention of a person in a danger-zone of an object has taken place and this can be reported while being independent of any social concerns. In particular, when the communication device calls the server, the device can identify itself as a part of a handshake communication, wherein the server is configured such that the identification of the communication device is not cross referenced with a hand-out list of the communication devices, e.g. wearable devices. Thus, exposing a worker's identity can be avoided.

With particular advantage, in a case of a method according to the invention, the at least one danger-zone of the at least one object is computed by means of a server and further, the at least one danger zone of the at least one object is broadcasted to the communication device of the person and/or to the communication device of the item by means of the server. Thus, computing of the at least one danger-zone can be very fast and/or accurate. Furthermore, with the use of the server, multiple communication devices of multiple persons respectively items can be operated simultaneously in a particularly simple way.

It may be advantageous if, in a method according to the invention, a communication between the communication device of the person and the server is a wireless communication and/or a communication between the communication device of the item and the server is a wireless communication. Thus, persons with a communication device can move freely on the site and/or objects with a communication device can move freely on the site and are not impaired. For example, a wireless local area network can be established for the wireless communication between the communication device of the person and/or item and the server.

It may be advantageous if, in a method according to the invention, a machine-learned method is used for computing the at least one danger-zone of the at least one object based on by means of a picture recognition created multidimensional-map. For the machine-learned method, a model based on sample data, also known as training data, is built in order to make predictions or decisions without being explicitly programmed to do so. For example, the sample data can comprise pictures of objects on a/the site. Further, for example, training data may comprise at least one multidimensional-training-map, in particular a plurality of multidimensional-training-maps, including respective at least one danger-zone, and/or, wherein each multidimensional-training-map comprises a specifically defined danger-zone. The respective danger-zone of a respective multidimensional-training-map may be determined manually via a simulation.

Especially, the pictures can be of a wind turbine part like a wind turbine blade and/or of a generator for generating electrical energy and/or a wind turbine nacelle and/or a machine on the site, e.g. a crane for lifting objects on the site. Especially, in the learning phase, values for free parameters can be determined which are used to translate given learning values for input variables into the corresponding learning values for the output variables. Connections between nodes of a neural network can be understood as free parameters.

It may be advantageous if, in a method according to the invention, a signal is given at least to the person when the communication device of the person is detected in the at least one danger-zone of the at least one object and/or a signal is given at least to the item when the communication device of the item is detected in the at least one danger-zone of the at least one object. Thus, dangerous situations for persons and/or items can be avoided. It is also conceivable that in addition to the signal given to the person respectively to the item, a further signal is given to a machine, such as a crane. Thus, dangerous situations can be avoided even better. It may be advantageous if, in a method according to the invention, the given signal to the person respectively to the item is a haptic and/or an audible and/or an optical signal. Preferably, a haptic signal instead of a visual or an audible signal is given to a person. Thus, dangerous distractions during operations of the person can be avoided.

It may be advantageous if, in a method according to the invention, when a time-event occurs and/or a movement-event occurs, then at least the site is detected again and/or the multidimensional-map is created again and/or the at least one danger-zone for the at least one object is computed again. Thus, danger-zones for objects on a constantly and rapidly changing site can be kept up to date. In particular, the site is detected continuously in time and/or the multidimensional-map is created continuously in time and/or the at least one danger-zone for the at least one object is computed continuously in time.

It may be advantageous if, in a method according to the invention, a risk-heatmap, in particular a spatial risk-heatmap, is created based on at least the on the at least one danger-zone detected communication device of the person and/or the on the at least one danger-zone detected communication device of the item. Thus, dangerous areas can be targeted for site safety personnel. A risk-heatmap can be understood as a data visualization technique that shows the magnitude of high-risk areas as color, e.g. as color in two dimensions. The variation in color may be by hue or intensity, giving obvious visual cues to the reader about how the phenomenon is clustered or varies over space of the site. In particular, a risk-heatmap is created based on detected intrusions of communication devices of persons respectively items in danger-zones of objects on the site.

It may be advantageous if, in a method according to the invention, the site is optically detected, especially by means of a camera. Thus, the detection of the site can be done particularly easily. In particular, the camera is a 3D-camera. Thus, spatial data can be won. Furthermore, the camera can be a position-fixed camera. For example, the camera can be position-fixed mounted on a tower. It is also conceivable that multiple cameras are used for the detection of the site. In particular, the multiple cameras are locally distributed on the site. Furthermore, it is also conceivable that the camera, especially a 3D-camera, is arranged at a drone or multiple cameras, especially multiple 3D-cameras, are arranged on multiple drones. Thus, the site can be detected very accurately.

It may be advantageous if, in a method according to the invention, the site is thermally detected and/or the site is detected by means of a time-of-flight system. Advantageously, with the thermal detecting of the site, additional information about the temperature of the objects on the site can be obtained. In particular, the thermal detecting can be performed by the means of a thermal sensor. Furthermore, information about the location of the objects on the site can be simply obtained with the time-of-flight system.

It may be advantageous if, in a method according to the invention, on the communication device of the person, specific information regarding the person are stored and for computing the at least one danger-zone of the at least object, these specific information are considered and/or on the communication device of the item, specific information regarding the item are stored and for computing the at least one danger-zone of the at least one object, these specific information are considered. Thus, the danger-zone can be computed particularly accurately for each object, and dangerous situations for persons, especially workers, can be particularly well avoided. A specific information about the person can be for example the age or a disability. A specific information about the object can be the weight.

According to a second aspect, the present invention shows a communication device for a person or for an item, wherein the communication device is configured to be used in a method according to the invention, and wherein especially the communication device is configured to be position-fixed mounted on the person and/or the item.

It may be advantageous if a communication device according to the invention is a badge and/or a helmet and/or a watch and/or a phone. Thus, the person, especially a worker, can go about his work unhindered. Advantageously, a haptic signal emitted by a watch can be perceived particularly advantageously by a person.

In particular, the communication device can reinforce the safety rules in a data driven way, leading a company to digital transformation using data in order to feed mitigation strategies, assure that potential safety violations are automatically logged without stopping any operations and create data based incidents risk-heatmap, allowing dangerous areas to be targeted for site safety personnel to mitigate the risks in these particular areas or sub-industries.

The communication device according to the second aspect of the invention thus exhibits the same advantages as have already been described with respect to the method according to the first aspect of the invention.

According to a third aspect, the present invention shows a system comprising a server, a detecting means for detecting a site, and at least one communication device according to the invention, wherein the system is configured to perform a method according to the invention.

In particular, the system is for detecting a person and/or an item being in a danger-zone of a site, wherein a person comprises a communication device and/or the item comprises a communication device.

Furthermore, the system can comprise a reference system, e.g. a differential global positioning system (DGPS). The reference system can broadcast correction data to improve the accuracy of received radio signals from e.g. navigation satellites, especially GPS, or the like.

The system according to the third aspect of the invention thus exhibits the same advantages as have already been described with respect to the method according to the first aspect of the invention and with respect to the communication device according to the second aspect of the invention.

Further measures improving the invention will be apparent from the following description of some embodiments of the invention, which are shown schematically in the figures. All features and/or advantages arising from the claims, the description or the drawings, including constructional details, spatial arrangements and process steps, may be essential to the invention both individually and in the various combinations. It should be noted that the figures are descriptive only and are not intended to limit the invention in any way.

With reference to the accompanying drawings, the invention will be explained in more detail below. Thereby shows:
- Fig. 1: a system for detecting a person and/or an item being in a danger-zone of a site,
- Fig. 2: a communication device,
- Fig. 3: a method for detecting a person and/or an item being in a danger-zone of a site, and
- Fig. 4: a method for detecting a person and/or an item being in a danger-zone of a site.

In the following figures, identical reference signs are used for the same technical features even of different embodiments.

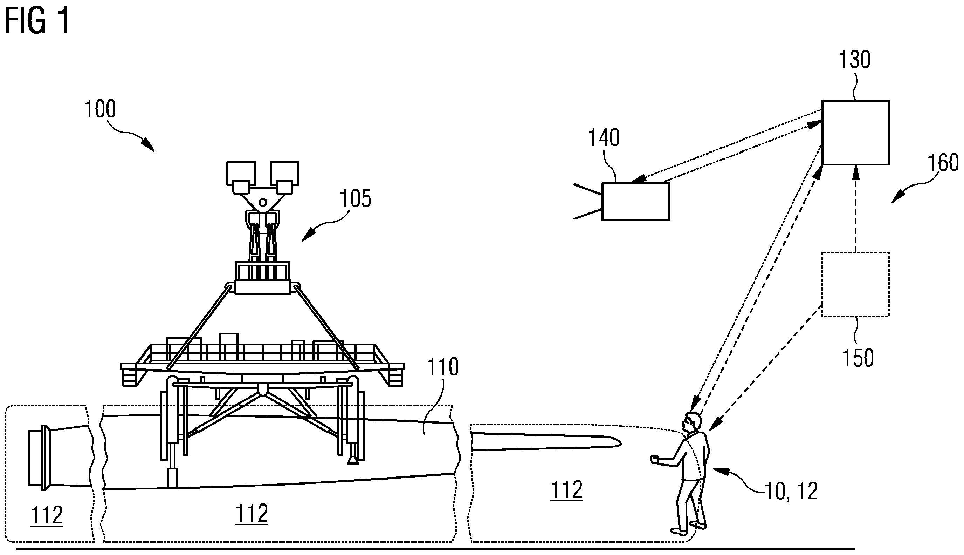

Fig. 1 shows a system 160 for detecting a person 10 being in a danger-zone 112 of a site 100, especially a work site in heavy industry such as wind turbine manufacturing and/or wind turbine assembling, the system 160 comprising a server 130, a detection means 140, e.g. a 3D-camera, for detecting the site 100, and at least one communication device 12 designed according to the invention. Furthermore, the system 160 is configured to perform a method according to the invention. In fig. 1, the person 10 wears a watch as the communication device 12. The detection means 140 detects the site 100 and generates data, especially site-data. The server 130 creates, out of the data, especially site-data, a multidimensional-map with a location of objects 110 on the site 100 or objects 110 and living beings on the site 100. Figure 1 schematically shows a turbine blade (shown in pieces) as an object 110. Based on the created multidimensional-map, the at least one danger-zone 112 for the turbine blade 110 on the site 100 is computed by the means of the server 130. Furthermore, the server 130 broadcasts the danger-zone 112 of the turbine blade 110 to the communication device 12 worn by the person 10, especially worn by a worker/operator. Furthermore, the location of the watch as the communication device 12 is determined by the means of the watch itself. As shown in fig. 1, the person 10 intrudes with the watch on the danger-zone 112 of the turbine blade 110, which is detected by the means of the watch itself. A signal, e.g. a haptic signal, is given to person for warning the person 10 being in the danger-zone 112 of the turbine blade 110. Furthermore, in addition, a signal for stopping a lifting device 105 could be sent to the lifting device 105, e.g. a crane, which is moving the turbine blade 110. Furthermore, in addition, the server 130 and/or the communication device 12 of the person 10 and/or an item can be designed to communicate with a reference system 150, e.g. a differential global positioning system (DGPS). Thus, the accuracy of radio signals, e.g. a GPS-signal, received by a communication device 12 for determining the location of the communication device 12 and/or received by the server 130 can be improved.

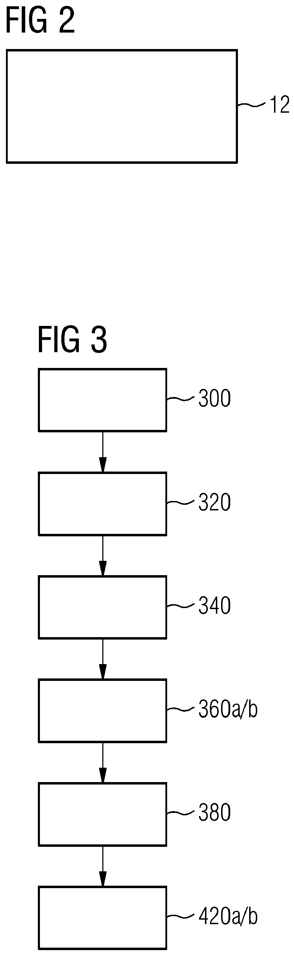

Fig. 2 shows a communication device 12 for a person 10 or for an item, wherein the communication device 12 is configured to be used in a method according to the invention. Especially, the communication device 12 is configured to be position-fixed mounted on the person 10 and/or the item. For example, the communication device 12 is a badge and/or a helmet and/or a watch and/or a phone.

Fig. 3 shows a method for detecting a person 10 (see e.g. fig. 1) and/or an item being in a danger-zone 112 of a site 100, wherein the person 10 comprises a communication device 12 and/or the item comprises a communication device. In a first step of the method, the site 100 is detected 300.

In a further step of the method, a multidimensional-map with a location of objects 110 on the site 100 or objects 110 and living beings on the site 100 is created 320. In a following step of the method, the at least one danger-zone 112 for at least one object 110 on the site 100 based on the created multidimensional-map is computed 340. In a further step of the method, the location of the communication device 12 of the person 10 is determined 360a and/or the location of the communication device of the item is determined 360b. In another step of the method, it is detected 380 that the communication device 12 of the person 10 and/or the communication device of the item is in the at least one danger-zone 112 of the at least one object 110, wherein the detection 380 is based on the at least one computed danger-zone 112 as well as on the determined location of the communication device 12 of the person 10 and/or of the item.

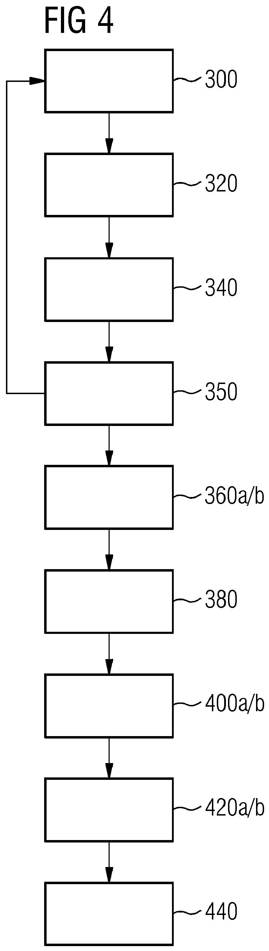

Fig. 4, shows like Fig. 3, a method for detecting a person 10 (see e.g. fig. 1) and/or an item being in a danger-zone 112 of a site 100. In addition to Fig. 3, the at least one danger-zone 112 of the at least one object 110 is computed by means of a data processing system, e.g. a server 130, and further, the at least one danger-zone 112 of the at least one object 110 is broadcasted 350 to the communication device 12 of the person 10 and/or to the communication device of the item by means of the data processing system, e.g. a server 130. Furthermore, the site 100 is detected 300 continuously in time, and the multidimensional-map is created 320 continuously in time, and the danger-zones 112 for the objects 110 on the site 100 are computed 340 continuously in time, and the danger-zones 110 are broadcasted 350 continuously in time. The term *"continuously in time"* can also be understood as in-real-time. Furthermore, in a further step of the method, the communication device 12 of the person 10 notifies 400a a server 130 when it is in the at least one danger-zone 112 of the at least one object 110, and/or the communication device of the item notifies 400b a server 130 when it is in the at least one danger-zone 112 of the at least one object 110. In a further step of the method, a signal is given 420a at least to the person 10 when the communication device 12 of the person 10 is detected in the at least one danger-zone 112 of the at least one object 110, and/or a signal is given 420b at least to the item when the communication device of the item is detected in the at least one danger-zone 112 of the at least one object 110. Additionally, in a further step of the method, a risk-heatmap is created 440 based on detected intrusions of communication devices 12 of persons 10 on danger-zones 112 of objects 110 on the site 100, especially workers, and/or based on detected intrusions of the communication devices 12 of items on danger-zones 112 of objects 110 on the site 100.

## Claims

1. Method for detecting a person (10) and/or an item being in a danger-zone (112) of a site (100), wherein the person (10) comprises a communication device (12) and/or the item comprises a communication device, wherein the method comprises:
detecting (300) the site (100),
creating (320) a multidimensional-map with a location of objects (110) on the site (100) or objects (110) and living beings on the site (100),
computing (340) the at least one danger-zone (112) for at least one object (110) on the site (100) based on the created multidimensional-map,
determining (360a) the location of the communication device (12) of the person (10) and/or determining (360b) the location of the communication device of the item,
detecting (380) that the communication device (12) of the person (10) and/or the communication device of the item is in the at least one danger-zone (112) of the at least one object (110) based on the at least one computed danger-zone (112) as well as on the determined location of the communication device (12) of the person (10) and/or of the item.

2. Method according to claim 1,
wherein the location of the communication device (12) of the person (10) is determined by the communication device (12) of the person (10) itself and/or the location of the communication device of the item is determined by the communication device of the item itself, and/or
wherein being in the at least one danger-zone (112) of the at least one object (110) is detected by the communication device (12) of the person (10) itself and/or being in the at least one danger-zone (112) of the at least one object (110) is detected by the communication device of the item itself.

3. Method according to any of the previous claims, wherein the communication device (12) of the person (10) notifies (400a) a server (130) when it is in the at least one danger-zone (112) of the at least one object (110) and/or the communication device of the item notifies (400b) a server (130) when it is in the at least one danger-zone (112) of the at least one object (110).

4. Method according to claim 3, wherein the server (130) is configured such that an identification of the communication device (12) of the person (10) in the notification of the communication device (12) of the person (10) remains unconsidered by the server (130).

5. Method according to any of the previous claims, wherein the at least one danger-zone (112) of the at least one object (110) is computed by means of a server (130) and further, the at least one danger-zone (112) of the at least one object (110) is broadcasted (350) to the communication device (12) of the person (10) and/or to the communication device of the item by means of the server (130).

6. Method according to any of the claims 3 to 5, wherein a communication between the communication device (12) of the person (10) and the server (130) is a wireless communication and/or a communication between the communication device of the item and the server (130) is a wireless communication.

7. Method according to any of the previous claims, wherein a machine-learned method is used for computing the at least one danger-zone (112) of the at least one object (110) based on a picture recognition created multidimensional-map, in particular wherein training data for training the machine-learned method comprise at least one multidimensional-training-map, in particular a plurality of multidimensional-training-maps, including respective at least one danger-zone, and/or, wherein each multidimensional-training-map comprises a specifically defined danger-zone.

8. Method according to any of the previous claims, wherein a signal is given (420a) at least to the person (10) when the communication device (12) of the person (10) is detected in the at least one danger-zone (112) of the at least one object (110) and/or a signal is given (420b) at least to the item when the communication device of the item is detected in the at least one danger-zone (112) of the at least one object (110), in particular wherein the given signal is a haptic and/or an audible and/or an optical signal.

9. Method according to any of the previous claims, wherein when a time-event occurs and/or a movement-event occurs, then at least the site is detected (300) again, and the multidimensional-map is created (320) again, and the at least one danger-zone (112) for the at least one object (110) is computed (340) again.

10. Method according to any of the previous claims, wherein a risk-heatmap is created (440) based on at least the in the at least one danger-zone (112) detected communication device (12) of the person (10) and/or on the in the at least one danger-zone (112) detected communication device of the item.

11. Method according to any of the previous claims, wherein the site (100) is optically detected, especially by means of a camera (140), and/or wherein the site (100) is thermally detected, and/or the site is detected by means of a time-of-flight system.

12. Method according to any of the previous claims, wherein on the communication device (12) of the person (10), specific information regarding the person (10) are stored and for computing (340) the at least one danger-zone (112) of the at least object (110), these specific information are considered, and/or on the communication device of the item, specific information regarding the item are stored and for computing (340) the at least one danger-zone (112) of the at least one object (110), these specific information are considered.

13. Communication device (12) for a person (10) or for an item, wherein the communication device (12) is configured to be used in a method according to any of the previous claims, and wherein especially the communication device (12) is configured to be position-fixed mounted on the person (10) and/or the item.

14. Communication device (12) according to claim 13, wherein the communication device (12) is a badge and/or a helmet and/or a watch and/or a phone.

15. System (160) comprising a server (130), a detection means (140) for detecting a site (100), and at least one communication device (12) according to claim 13 or claim 14, wherein the system (160) is configured to perform a method according to any of the previous claims 1 to 12.
